# EUROPEAN PATENT APPLICATION

(11) **EP 1 521 459 A2**
(43) Date of publication of application: **06.04.2005**
(21) Application number: 04018141.4
(22) Date of filing: 30.07.2004
(51) Int. Cl.: H04N 5/445

(54) **System, method and apparatus for remotely controlling a media computing device**

(30) Priority: 30.09.2003 US 507246 P; 30.06.2004 US 880704
(71) Applicant: MICROSOFT CORPORATION, Redmond, Washington 98052 (US)
(72) Inventor: Flora, William T., Seattle, WA 98112 (US); Fong, Jeffrey Cheng-Yao, Seattle, WA 98119 (US); Weinberg, Mark J., Kirkland, WA 98033 (US); Mayes, Mark S., Woodinville, WA 98072 (US); Niethammer, Michelle, Bellevue, WA 98008 (US)
(74) Representative: Grünecker, Kinkeldey, Stockmair & Schwanhäusser Anwaltssozietät

(57) **Abstract**

According to an aspect of the present invention, a remote control device for interfacing with a Media Computing Device is provided. Included on the remote control are a plurality of audio/video buttons, numeric keypad buttons, transport buttons, and navigation buttons. In particular, one of the buttons, which is part of the navigation buttons is a START button.

## Description

### CROSS-REFERENCE TO RELATED APPLICATION

This application claims the benefit of U.S. Provisional Application No. 60/507,246, filed September 30, 2003, which is incorporated by reference herein.

### FIELD OF THE INVENTION

In general, the present invention relates to remote controls and remote control methodologies, and in particular, to a system, method and apparatus for remotely controlling media-based computing devices.

### BACKGROUND OF THE INVENTION

Historically computing devices and entertainment centers have been separate and distinct devices. Typically computing devices were used for business purposes, such as word processing and database management, and to play computer specific games. Likewise, computing devices are typically designed for user interaction from a nearby position, such as seated at a desk where there computing device is located. Interaction with a computing device generally occurs through the use of a keyboard and some form of a pointing device, such as a mouse.

In contrast, entertainment systems typically provide audio and/or video interaction for a user. In addition, interaction with an entertainment center is generally designed to allow the user to be at a more remote location than that of a computing device. For example, a typical entertainment center may be designed to provide user interaction with the entertainment center being located at one end of a room and the user at the other, possibly resting on a couch. Interaction between the user and the entertainment center often occurs via a remote control. An entertainment center remote control generally allows a user to press buttons on the remote control which in turn, generate a signal from the remote control that is received by the entertainment center. Signals received by the entertainment center provide instructions to the entertainment center as to the interaction desired by the user, such as turning on the television.

In recent years, entertainment centers have become more integrated and sophisticated, providing users with a multitude of choices. For example, a typical entertainment center may include any combination of an AM/FM receiver, a Compact-Disk (CD) player, a Digital Video Disk (DVD) player, and a Television. Other audio/visual components may also be included in the typical entertainment center. Attempts have been made to provide a user of an entertainment center with a "universal" remote control for interfacing with each of the devices that make up the entertainment center. However, as entertainment centers have become more complex, the universal remote controls have become difficult to operate and confusing to the user.

In addition to the drawbacks of universal remote controls, current systems do not allow a user to interact with both an entertainment center and a computing device from the same remote location.

Accordingly, a need exists for a system, method and apparatus for allowing a user to interact with a computing device and an entertainment center from a remote viewing position,

### SUMMARY OF THE INVENTION

According to an aspect of the present invention, a remote control device for interfacing with a Media Computing Device is provided. Included on the remote control is a plurality of audio/video buttons, numeric keypad buttons, transport buttons, and navigation buttons. In particular, one of the buttons, which is part of the navigation buttons, is a START button.

According to another aspect of the present invention, a remote control device for interacting and interfacing with a Media Computing Device is provided. The remote control device includes a plurality of navigation buttons, including a START button. Also included on the remote control device are several transport buttons, a plurality of audio/video buttons, and a plurality of numeric keypad buttons.

According to still another aspect of the present invention, a remote control device is provided. Disposed on the remote control device is a START button and a plurality of shortcut buttons.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a block diagram of one example of a Media Computing Device Remote Control, according to an embodiment of the present invention;
FIGURE 2 illustrates a block diagram of a START button, according to an embodiment of the present invention;
FIGURE 3 illustrates a block diagram of the navigation control buttons of a Media Computing Device Remote Control, according to an embodiment of the present invention;
FIGURE 4 illustrates a block diagram of four optional buttons that may also be included with the navigation control buttons, according to an embodiment of the present invention;
FIGURE 5 illustrates a block diagram of the transport control buttons of a Media Computing Device, according to an embodiment of the present invention;
FIGURE 6 illustrates a block diagram of the audio/video control buttons, according to an embodiment of the present invention;
FIGURE 7 is a block diagram of a numeric keypad button of a Media Computing Device Remote Control, according to an embodiment of the present invention;
FIGURES 8A-8C illustrate block diagrams of a side view, front view, and back view of a Media Computing Device Remote Control, according to an embodiment of the present invention; FIGURES 9A + 9B are illustrates a block diagram of a Media Computing Device Remote Control configuration, according to an embodiment of the present invention;
FIGURES 10A and 10B are block diagrams illustrating other configurations of a Media Computing Device Remote Control, according to an embodiment of the present invention;
FIGURES 11A and 11B illustrate yet another configuration of the Media Computing Device Remote Control, according to an embodiment of the present invention;
FIGURES 12A-12K illustrate different block views of a Media Computing Device Remote Control, according to an embodiment of the present invention;
FIGURE 13A is a block diagram of one example of a Media Computing Device, according to an embodiment of the present invention; and
FIGURE 13B is a block diagram of a Media Computing Device Remote Control, according to an embodiment of the present invention.

### DETAILED DESCRIPTION OF THE PREFERRED EMBODIMENT

A device that integrates both computing devices and any form of entertainment center has been developed that provides a user with total computing/entertainment from a central location. The integration of these devices, as referred to herein is a "Media Computing Device." A Media Computing Device may include a computing device integrated with any combination of audio/video devices. For example, a Media Computing Device may include a computing device, a DVD player, a CD player, and a visual interface, such as a plasma monitor, are all integrated for operation and control via the computing device.

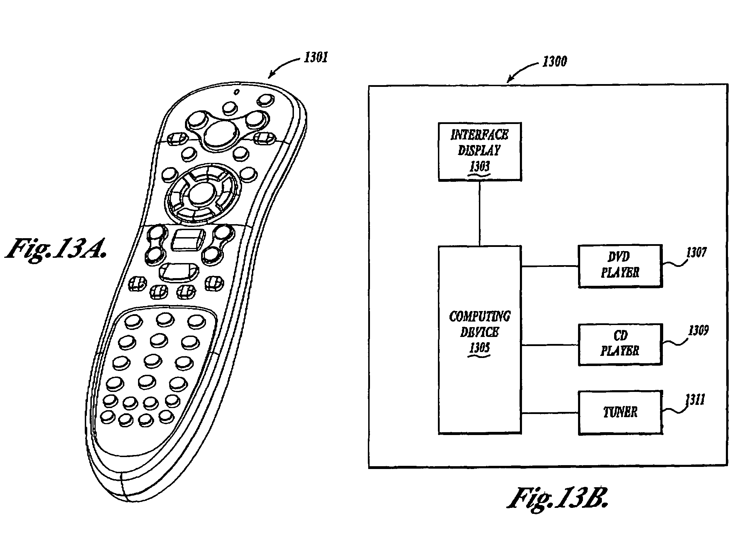

FIGURE 13A is a block diagram of one example of a Media Computing Device 1300, according to an embodiment of the present invention. Included in the Media Computing Device 1300 is an interface display 1303, a computing device 1305, a DVD player 1307, a CD player 1309, and a TV tuner 1311. As will be appreciated, the Media Computing Device 1300 may include any combination of devices desired by a user.

Illustrated in FIGURE 13B is a block diagram of a remote control 1301 designed to provide a user with the ability to manipulate and interact with the Media Computing Device 1300 (FIGURE 13A) from a remote location, according to an embodiment of the present invention. A remote control, such as remote control 1301, for interfacing with a Media Computing Device will be referred to herein as a "Media Computing Device Remote Control." The Media Computing Device Remote Control 1301 is configured to provide interaction between a user and the Media Computing Device 1300 by providing buttons for selection by a user which in response to actuation by the user generate within the Media Computing Device Remote Control 1301 a signal that is transmitted from the Media Computing Device Remote Control 1301 and received by the Media Computing Device 1300. Transmission of signals for interfacing with electronic devices is know in the art and will not be described in detail herein. For example, the signal that is generated by the Media Computing Device Remote Control 1301 may be transmitted wirelessly and/or via an infrared signal.

The Media Computing Device 1300, in response to receiving a signal from the Media Computing Device Remote Control 1301, generates an appropriate response. As described herein the appropriate response may be any variety of responses from displaying a user-defined shortcut screen on the interface display 1303 to placing the Media Computing Device 1300 in standby.

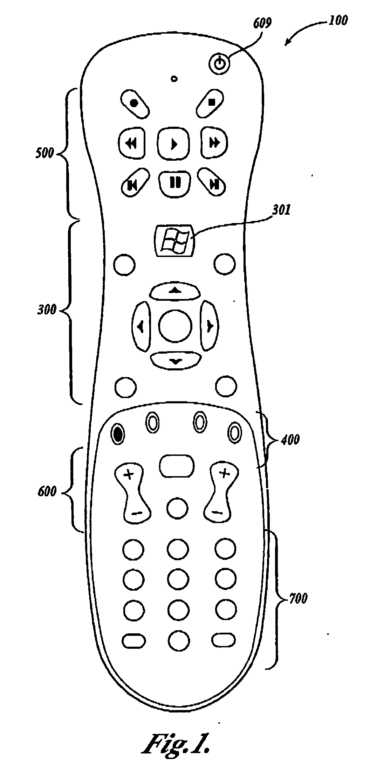

FIGURE 1 is a block diagram of one example of a Media Computing Device Remote Control 100, according to an embodiment of the present invention. The Media Computing Device Remote Control 100 includes a plurality of buttons for allowing a user to generate a signal from the Media Computing Device Remote Control 100 for controlling an interfacing with a Media Computing Device. In general, the buttons on the Media Computing Device Remote Control 100 are separated into four major functional areas, including navigation buttons 300, transport control buttons 500, audio/video control buttons 600, and numeric keypad buttons 700. The buttons in each of those four groups are presented on the Media Computing Device Remote Control 100 in the context of a virtual design. The design applies usability feedback and presents button grouping and placement for allowing a user ease of manipulation of the Media Computing Device Remote Control 100.

The description provided herein of the buttons of the Media Computing Device Remote Control 100 being mechanical buttons that are pressed or actuated by a user is for explanation purposes only and is not intended to limit the invention to a single embodiment. In alternative embodiments, the buttons may be displayed electronically for interaction by a user. For example, buttons may be displayed on a touch sensitive display and actuated by a user interacting with the touch sensitive display.

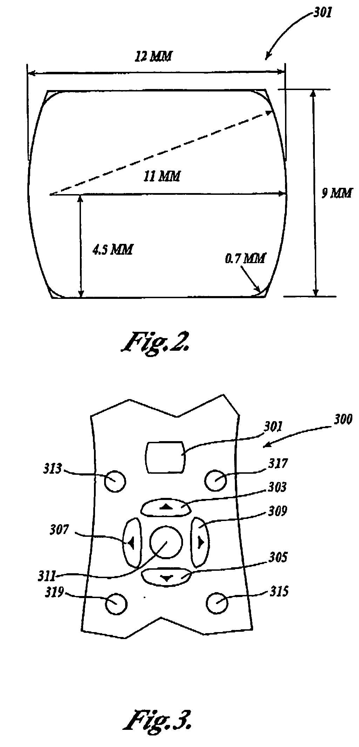

Included in the navigation control buttons group 300 is a START button 301. Referring now to FIGURE 2, the START button 301, in an actual embodiment of the present invention, is the shape of a rounded rectangle. The width of the START button 301 is approximately 12 mm, and the height of the START button 301 is approximately 9 mm. With a comer radius on each corner of the rounded rectangle of approximately .7 mm. In an actual embodiment, the START button 301 includes a Wmdows® flag depicted on the button itself. Additionally, the START button may also be the color of a green ''jewel'' with the Windows® flag encased within the jewel. The above description of the START button is illustrative in nature and is not intended to limit the configuration of the START button to only this example. In alternative embodiments, the START button may be a different size, shape, color etc. For example, the START button may be a round button containing a Windows® flag.

As described herein, there are two classes of buttons that make up the buttons of the button groups of the Media Computing Device Remote Control 100. Those classes include buttons that are required to fully interact with a Media Computing Device and optional control buttons. Optional control buttons are those buttons that are supported by Media Computing Device software but are not required on the Media Computing Device Remote Control 100 for interaction with a Media Computing Device.

FIGURE 3 illustrates a block diagram of the navigation control buttons 300 of a Media Computing Device Remote Control 100, according to an embodiment of the present invention. The navigation control buttons 300 form the main interaction point with a Media Computing Device. The navigation control buttons 300 enable a user to easily invoke and interact with the interface display of a Media Computing Device. This interface may be based on a focus point that can be moved around the interface display and activated. This so-called "tab interface" provides a natural navigation method when a user is farther away from the display device than in typical computing device scenarios.

Included in the navigation control buttons 300 are a START button 301, up button 303, down button 305, back button 307, forward button 309, OK button 311, backspace button 313, more information button 315, guide button 317, and a live TV button 319. As described below, there may be more or fewer buttons included in the navigation control buttons 300.

A first actuation by a user of the START button 301 generates a signal that instructs the Media Computing Device to display a Media Computing Device home page, and if the Media Computing Device is not currently running, to start the Media Computing Device. Actuation of the START button 301 results in the display of the Media Computing Device home page regardless of what interaction is currently being provided to the user. For example, if a user is watching a movie stored on a DVD, actuation of the START button will display on the interface the home page of the Media Computing Device.

Actuation of the up button 303 by a user generates from the Media Computing Device Remote Control 100 a signal that instructs the Media Computing Device to move the focus point on the interface up one location from its previous position, and if at the top of a interface display to take no action. Alternatively, if the focus point is at the top of the interface display, the Media Computing Device may move the focus point to the bottom of the interface display. This button may also be programmed to "auto-repeat" the action of moving the focus point up one location on an interface display. "Auto-repeat," as used herein, is the generation of the same signal numerous times in response to a user holding down a particular button.

The down button 305, upon actuation, moves the focus point on an interface display down one location. If the focus point is at the bottom of the interface display, actuation of the down button 305 will result in no action. In an alternative embodiment, if the focus point is at the bottom of the interface display, selection of the down button 305 may generate a signal to instruct the media device to move the focus point to the top of the interface display. The down button 305 may also include an auto-repeat feature. The left button 307, upon actuation, generates a signal to move the focus point on the interface display left one position. If the focus point on the interface display is at the leftmost position, selection of left button 307 generates a signal instructing the Media Computing Device to go back one page in the interface display stack. The interface display stack tracks the information displayed on the interface display. This button may also be programmed to auto-repeat the signal. The right button 309, upon actuation, generates a signal to the Media Computing Device to move the focus point on the interface display one position to the right, and if at the rightmost position to take no action. This button may also be programmed for auto-repeat

The OK button 311, upon actuation, generates a signal instructing the Media Computing Device to perform the action indicated on the interface display by the focus point. The back button 313, upon actuation by a user, generates a signal from the Media Computing Device Remote Control 100 to instruct the Media Computing Device to go back one location in the interface display stack. The more information button 315, upon actuation by a user, generates a signal instructing the Media Computing Device to provide information on the interface display, if available, for the current focus point displayed on the interface display. A second press of the more information button 315 generates a signal to the Media Computing Device to dismiss the information provided on the interface display.

The guide button 317, upon actuation by a user, generates a signal from the Media Computing Device Remote Control 100 to instruct the Media Computing Device to invoke an Electronic Program Guide ("EPG"). Additionally, upon a second actuation by a user of the guide button 317, a signal is generated instructing the Media Computing Device Remote Control 100 to cycle through the guide options presented on the interface display. The live TV button 319, upon actuation by a user, generates a signal from the Media Computing Device Remote Control 100 instructing the Media Computing Device to bring live TV to the front of the interface display and display the last channel the user was watching.

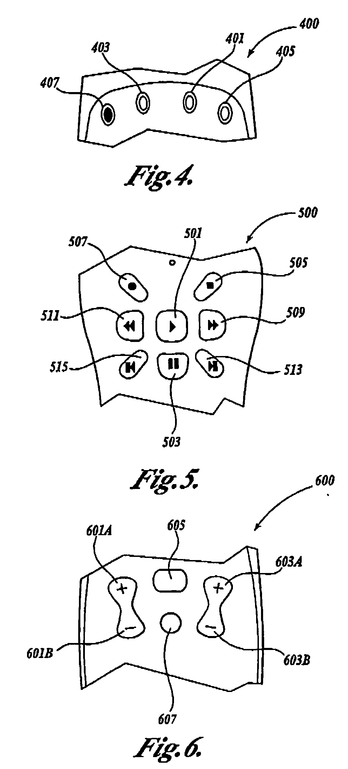

FIGURE 4 illustrates a block diagram of four optional buttons that may also be included with the navigation control buttons 300, according to an embodiment of the present invention. In particular, FIGURE 4 illustrates a block diagram of four shortcut buttons 400 that may be included in the navigation control buttons group 300. Included in the shortcut buttons 400 are a My Videos button 407, a My Music button 403, a My TV button 401, and a My Pictures button 405.

Upon actuation of the My TV button 401, a signal is generated from the Media Computing Device Remote Control 100 instructing the Media Computing Device to display on the interface a "TV Home" page. The TV Home page is a predefined TV home page that may be created and/or selected by a user as their home page for selection of TV channels. The My Music button 403, upon actuation by a user, generates a signal from the Media Computing Device Remote Control 100 instructing a Media Computing Device to display on the interface display a "Music" page. The My Music button 403 thereby acts as a shortcut to a predefined Music page that is created by a user. The My Pictures button 405, upon actuation by a user, generates a signal from the Media Computing Device Remote Control 100 instructing a Media Computing Device to display on the interface display a "My Pictures" page. The My Pictures button 405 acts as a shortcut to a user's predefined My Pictures page. The My Videos button 407, upon actuation by a user, instructs Media Computing Device Remote Control 100 to generate a signal instructing the Media Computing Device to display on the interface a "My Videos" page. In general, the My Videos button 407 acts as a shortcut to a user's My Videos page.

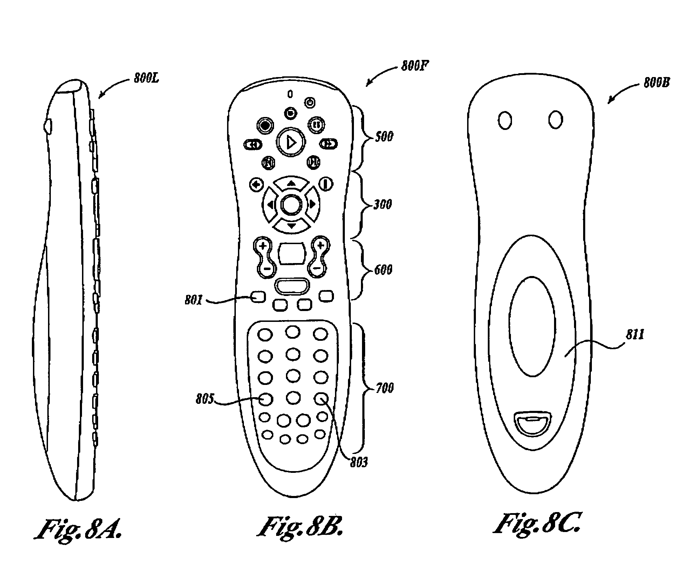

In addition to the optional shortcut buttons 400 illustrates in FIGURE 4, a Media Computing Device Remote Control may also include additional option buttons. For example, additional option buttons may include a record TV button 801 (FIGURE 8B). A record TV button 801, upon actuation by a user, may generate a signal from the Media Computing Device Remote Control 100 to instruct a Media Computing Device to display on the interface a "Recorded TV" page. In general, the recorded TV button 801 acts as a shortcut to a user-created recorded TV page. Additionally, the shortcut buttons 400 may also include a radio button (not shown). Actuation of a radio button generates a signal from the Media Computing Device Remote Control 100 instructing a Media Computing Device to display on the interface a "Radio" page. In general, the Radio button acts as a shortcut instructing the Media Computing Device to display on an interface a user's predesigned radio page.

FIGURE 5 illustrates a block diagram of the transport control buttons 500 of a Media Computing Device 100, according to an embodiment of the present invention. Included in the transport control buttons 500 is a play button 501, pause button 503, stop button 505, record button 507, fast forward button 509, rewind button 511, skip button 513, and replay button 515.

Actuation by a user of play button 501 generates a signal from the Media Computing Device Remote Control 100 instructing a Media Computing Device to start (if paused, continue) playback of media at a present position pointer. Actuation by a user of the pause button 503 generates a signal from the Media Computing Device Remote Control 100 instructing a Media Computing Device to pause the playback of media at a present position. Continued actuation of pause button 503 generates signals to the Media Computing Device to toggle the pause state between pause and continue playback at a present position pointer. Actuation of the stop button 505 generates a signal from the Media Computing Device Remote Control 100 instructing a Media Computing Device to stop media playback.

In one embodiment of the present invention, actuation of stop button 505 generates a signal instructing the Media Computing Device to stop media playback and to return the position pointer to the start of the media. Alternatively, the Media Computing Device may leave the position pointer at the location in the media where the stop signal was received. Actuation of record button 507 generates a signal from the Media Computing Device Remote Control 100 instructing a Media Computing Device to record media to a disc. Actuation of the fast forward button 509 generates a signal from the Media Computing Device Remote Control 100 instructing a Media Computing Device to speed up the time base of a media stream to a first fast forward value. If the media is a slide show, actuation of the fast forward button 509 instructs the Media Computing Device to skip to the next picture in the slide show.

The first fast forward value may be any multiple of the normal playback speed. For example, the first fast forward value may be three times the normal playback speed of the media. Continued actuation of the fast forward button 509 generates signals instructing the Media Computing Device to cycle through the fast forward speed values looping through a normal speed, a first fast forward value, and to any additional fast forward values that are predetermined for the Media Computing Device. The predetermined fast forward values may be any multiple of the normal playback speed for media. Additionally, when media being presented to a user is a slide show, continued actuation by a user of fast forward button 509 generates signals instructing the Media Computing Device to continue to skip to the next picture in the series of pictures of the slide show.

Actuation of the rewind button 511 on the Media Computing Device Remote Control 100 generates a signal from the Media Computing Device Remote Control 100 instructing a Media Computing Device to speed up the time base and reverse direction of the media stream to a first rewind value. If the media stream is a slide show, actuation of the rewind button 511 instructs the Media Computing Device to skip to the previous picture in the slide show. A first rewind value may be any multiple of the normal playback speed of a media stream in a reverse direction. For example, the first rewind value may be three times the normal playback speed of a media stream in a reverse direction. Additional actuation by a user of rewind button 511 generates signals instructing a Media Computing Device to cycle through the various rewind speed values looping through the normal speed value, the first rewind speed value, and any additional predetermined rewind speed values. Likewise, if the media is a slide show, continued actuation results in the Media Computing Device continuing to skip to the previous picture in the slide show. Predetermined rewind values may be any multiple of the normal playback speed of a media stream in the reverse direction.

Actuation by a user of a skip button 513 generates a signal from the Media Computing Device Remote Control 100 instructing a Media Computing Device to skip ahead an increment in the media. For example, if the media being played is music from a CD, actuation of the skip button 513 results in the Media Computing Device skipping ahead one song in the play list. If the media is a movie on a DVD, actuation of the skip button 513 results in the Media Computing Device skipping to the next chapter. If the media is a slide show, the Media Computing Device will skip to the next picture in response to a user pressing the skip button 513.

Actuation by a user of a replay button 515 generates a signal from the Media Computing Device Remote Control 100 instructing a Media Computing Device to rewind the position pointer one increment and replay that portion of the media. For example, if the media being played is a song from a CD, actuation of the replay button 515 will result in the Media Computing Device returning to the beginning of the song. If the media is a movie from a DVD, actuation of the replay button 515 results in the movie returning to the beginning of the chapter being viewed. Likewise, if the media is a slide show, the previous picture is provided in response to actuation of the replay button 515.

FIGURE 6 illustrates a block diagram of the audio/video control buttons 600, according to an embodiment of the present invention. In particular, the audio/video control buttons 600 may include a volume up button 601A, a volume down button 601B, a channel/page up button 603A, a channel/page down button 603B, a mute button 605, and a DVD menu button 607.

Actuation by a user of the volume up button 601 A, generates a signal from the Media Computing Device Remote Control 100 instructing a Media Computing Device to increment the current volume by 1 unit and if muted to unmute the volume. The volume up button 601A may be configured to auto-repeat Actuation of the volume down button 601B generates a signal from the Media Computing Device Remote Control 100 instructing a Media Computing Device to increment the current volume by 1 unit in the negative direction, and if muted, to unmute the volume. Volume down button 601B may be programmed to auto-repeat

Actuation of the channel/page up button 603A generates a signal from the Media Computing Device Remote Control 100 to increment the current channel displayed on an interface to a user by 1. Additionally, if the interface display is in a list view mode, the signal instructs the Media Computing Device to move forward a page in the list. The channel/page up button 603A may be programmed to auto-repeat. Actuation of the channel/page down button 603B generates a signal from the Media Computing Device Remote Control 100 instructing a Media Computing Device to decrement the current channel displayed on an interface by 1. Additionally, if a list view is currently being displayed on the interface display, the signal instructs a Media Computing Device to move back a page in the list being displayed. The channel/page down button 603B may be configured to auto-repeat.

Actuation by a user of mute button 605 generates a signal from the Media Computing Device Remote Control 100 instructing a Media Computing Device to mute the volume being provided by the Media Computing Device. Continuous actuation of the mute button 605 generates signals instructing the Media Computing Device to toggle between a mute and a non-mute state.

Actuation of the DVD menu button 607 generates a signal from the Media Computing Device Remote Control 100 instructing a Media Computing Device to provide on the interface display a DVD menu. Also included in the navigation control buttons 300 is a standby button 609 (FIGURE 1). Actuation of the standby button 609 generates a signal from the Media Computing Device Remote Control 100 instructing a Media Computing Device to either transfer into a standby mode or to transfer into a wakeup mode. In particular, if a Media Computing Device is currently in a standby mode, actuation of standby button 609 generates a signal instructing the Media Computing Device to wake up and provide an interface to a user. Alternatively, if a Media Computing Device is currently awake and providing an interface to a user, actuation of the standby button 609 generates a signal instructing the Media Computing Device to go into a standby mode.

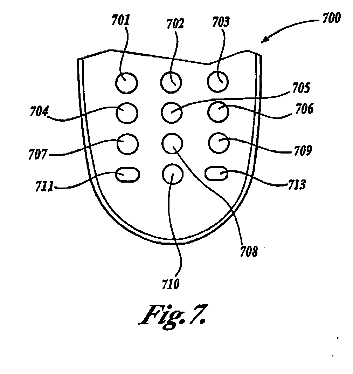

FIGURE 7 is a block diagram of a numeric keypad button 700 of a Media Computing Device Remote Control 100, according to an embodiment of the present invention. Included in the numeric keypad button 700 or numeric buttons "1" 701, "2" 702, "3" 703, "4" 704, "5" 705, "6" 706, "7" 707, "8" 708, "9" 709, "10" 710. As is well known to those skilled in the relevant art, numeric keypad buttons 701-710 operate to generate a signal for the respective numeric buttons. Additionally, numeric keypad buttons 702-710 may be operated to provide alphanumeric input to a Media Computing Device. Also included in the numeric keypad 700, in an embodiment of the present invention, may be a clear button 711, an enter button 713, a pound button 803 (FIGURE 8B), and a star button 805 (FIGURE 8B).

FIGURES 8A-8C illustrate block diagrams of a side view 800L, front view 800F, and back view 800B of a Media Computing Device Remote Control, according to an embodiment of the present invention. As can be seen from the block diagrams illustrated in FIGURES 8A-8C of the Media Computing Device Remote Control, the device is ergonomically designed to provide ease of use and comfort for a user. Also, as shown in the back view 800B of the Media Computing Device Remote Control 100, is a battery door 811 for providing batteries to the Media Computing Device Remote Control. Additionally, referring to the front view 800F of the Media Computing Device Remote Control, an alternative configuration of the button groupings 300, 500, 600, 700 is provided. As shown in the front view 800F, the buttons contained within the button groups 300, 500, 600, 700 are arranged differently and include additional optional buttons than those illustrated in the Media Computing Device Remote Control 100 of FIGURE 1.

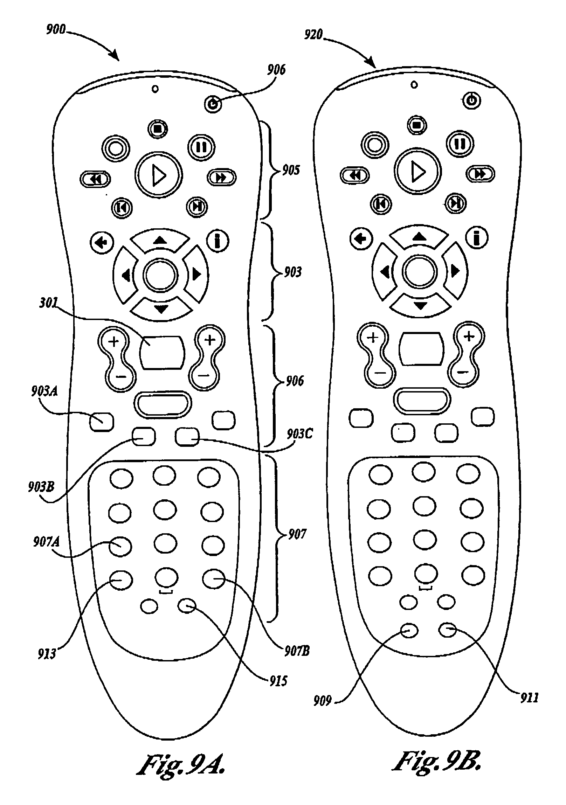

FIGURES 9A and 9B illustrate yet another alternative embodiment of the layout and design of a Media Computing Device Remote Control, according to an embodiment of the present invention. In particular, FIGURE 9A illustrates a block diagram of a Media Computing Device Remote Control configuration 900, according to an embodiment of the present invention. As can be seen from the ergonomically designed Media Computing Device Remote Control 900, the navigation control buttons 903 are designed and configured differently than the navigation control buttons 300 illustrated in FIGURE 1. In addition to design layout, the navigation control buttons 903 include optional buttons not included in the Media Computing Device 100 (FIGURE 1). In particular, navigation control buttons 903 include a recorded TV button 903A, guide button 903B, and a live TV button 903C.

The transport control buttons 905 are also designed and displayed differently than the transport control buttons 500 illustrated in FIGURE 1. Likewise, the audio/video control buttons 906 are designed and implemented differently than the audio/video control buttons 600 illustrated in FIGURE 1. Still further, the numeric keypad buttons 907 are designed and configured differently than the numeric keypad buttons 700 and include additional option buttons. The optional buttons included in the numeric keypad buttons 700 are a star button 907A, a pound button 907B, a clear button 913, and an enter button 915.

However, as is consistent with the Media Computing Device Remote Control 100 illustrated in FIGURE 1, and as with each of the other Media Computing Device Remote Controls illustrated in the figures of the present application, each include a START button 301. In one example, the START button 301 is positioned toward the center of the Media Computing Device Remote Control 900 and is of the particular shape, size and color.

FIGURE 9B is a block diagram of yet another alternative embodiment of the Media Computing Device Remote Control, according to an embodiment of the present invention. In particular, in addition to the buttons and design layout described with respect to FIGURE 9A, the Media Computing Device Remote Control 920 illustrated in FIGURE 9B includes additional option buttons 909 and 911 that may be configured by a user and/or by a manufacturer to generate signals for controlling a Media Computing Device.

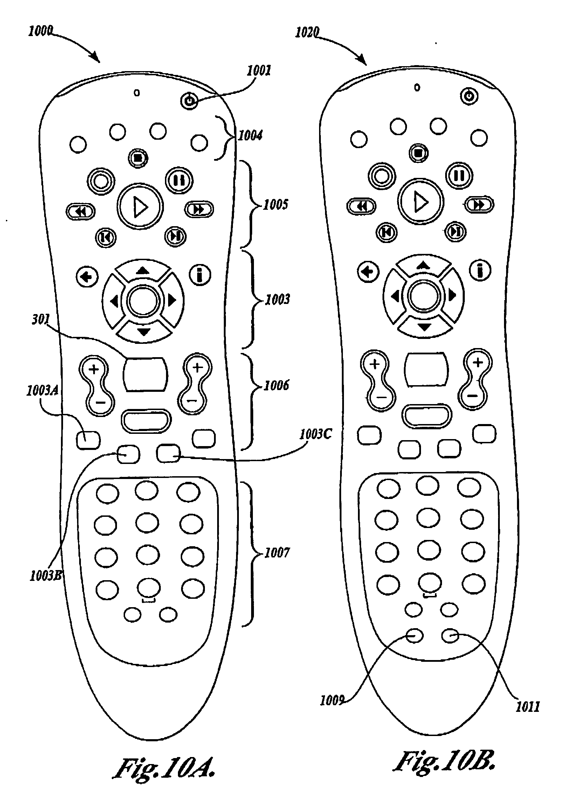

FIGURES 10A and 10B are block diagrams illustrating other configurations of a Media Computing Device Remote Control 1000 and 1020, respectively, according to an embodiment of the present invention. The Media Computing Device Remote Control 1000, includes shortcut buttons 1004, including My TV, My Music, My Pictures, and My Video buttons. Also included in the Media Computing Device Remote Control 1000 are the transport control buttons 1005, navigation control buttons 1003, audio/video control buttons 1006 and numeric keypad buttons 1007. Referring to the navigation control buttons 1003, as with all the other embodiments of the Media Computing Device Remote Control described herein, a START button 301 is included. In addition to the START button 301, the navigation control buttons 1003 include a recorded TV button 1003A, a guide button 1003B and a live TV button 1003C.

Referring now to FIGURE 10B included in the Media Computing Device Remote Control 1020, in addition to the buttons described in respect to FIGURE 10A are the additional option buttons 1009 and 1011 that may be defined by a user and/or manufacturer of the Media Computing Device Remote Control to generate particular signals for interfacing with a Media Computing Device.

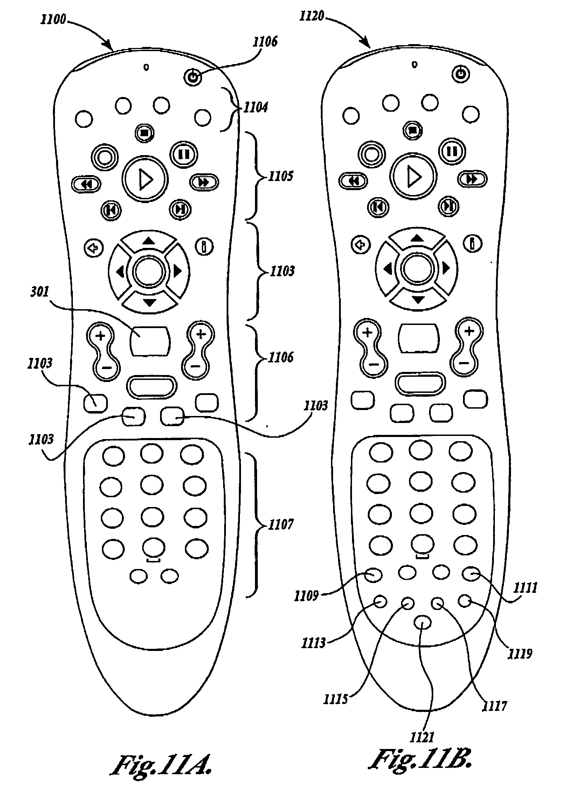

FIGURES 11A and 11B illustrate yet another configuration of the Media Computing Device Remote Control 1100 (FIGURE 11A) and 1120 (FIGURE 11B), according to embodiments of the present invention. In particular, Media Computing Device Remote Controls 1100 and 1120 include a standby button 1106, shortcut buttons 1104, including a My TV button, a My Music button, a My Pictures button, and a My Videos button. Additionally, included in the Media Computing Device Remote Controls 1100 and 1120 are a unique arrangement of the transport control buttons 1105, the navigation control buttons 1103, the audio/video control buttons 1106, and the numeric keypad buttons 1107. As described above, the navigation control buttons 1103 include a START button 301. Also included in the navigation control buttons are a recorded TV button, guide button, and a live TV button.

Referring now to FIGURE 11B, included in the Media Computing Device Remote Control 1120 may be additional user-definable/manufacture-definable option buttons 1109 and 1111. Additionally, according to an embodiment of the present invention, optional user-definable color buttons may also be included. In particular, Media Computing Device Remote Control 1120 includes a solid color red button 1113, a solid color green button 1115, a solid color yellow button 1117, and a solid color blue button 1119. Also included is a teletext button 1121, for transferring the numeric keypad buttons 1107 from numeric keypad buttons to teletext buttons. Teletext input is known to those of skill in the relevant art and will not be described herein.

The solid color buttons 1113-1119 may be configured to interface in a different manner depending on whether the Media Computing Device Remote Control 1120 is in teletext mode or not For example, if the Media Computing Device Remote Control 1120 is in teletext mode, the solid color red button may be configured to jump to a red shortcut. A red shortcut link may be a link that is defined by a user. Similarly, teletext mode actuation of the solid color green button 1115 may generate a signal instructing a Media Computing Device to display a green shortcut link. Likewise, actuation of a solid yellow color button 1117, when the Media Computing Device Remote Control 1120 is in teletext mode, generates a signal from the Media Computing Device Remote Control 1120 instructing a Media Computing Device to provide on the interface display a display associated with a red shortcut link. Finally, actuation of the solid color blue button 1119, when the Media Computing Device Remote Control 1120 is in teletext mode, generates a signal from the Media Computing Device Remote Control 1120 instructing a Media Computing Device to generate on the interface display a display associated with a red shortcut link.

Alternatively, when the Media Computing Device Remote Control 1120 is not in teletext mode, the solid color buttons 1113-1119 may be configured to generate user-defined signals for interfacing with a Media Computing Device.

In addition to the buttons described with respect to the embodiments illustrated in FIGURES 1-11B, embodiments of a Media Computing Device Remote Control may include a print button, an aspect button, and an eject button. Actuation of the print button may generate a signal from the Media Computing Device Remote Control to instruct a Media Computing Device to print an item that is the focus point of an interface. Alternatively, it may instruct the Media Computing Device to instruct an application operating within the Media Computing Device to print a particular item. Actuation of an aspect button by a user may generate a signal from the Media Computing Device Remote Control to toggle between various aspect modes of a video display. For example, an aspect mode may be 16 x 9. Finally, actuation of an eject button may generate a signal from the Media Computing Device Remote Control instructing a Media Computing Device to eject a media drive, such as a DVD or CD drive.

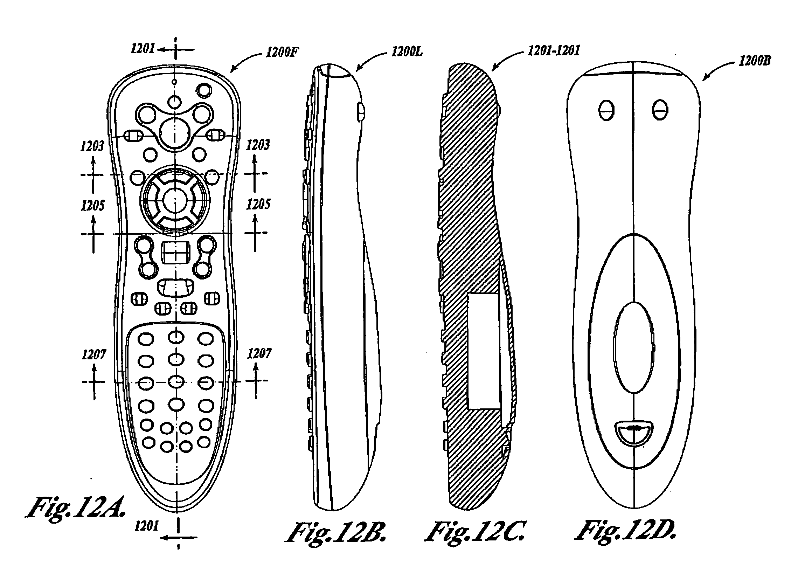

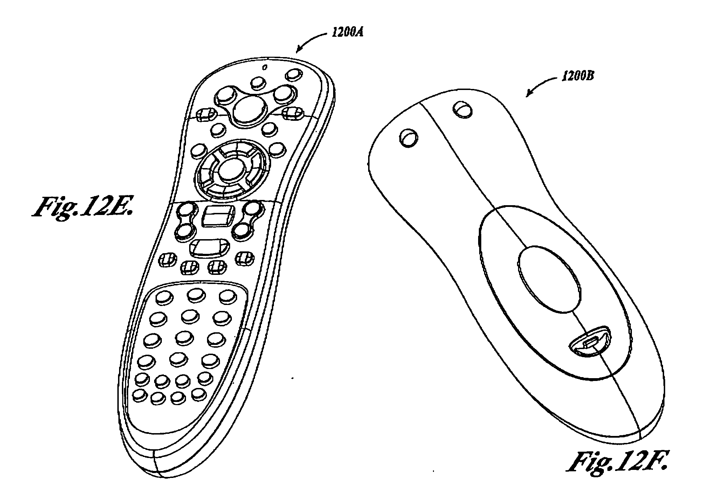

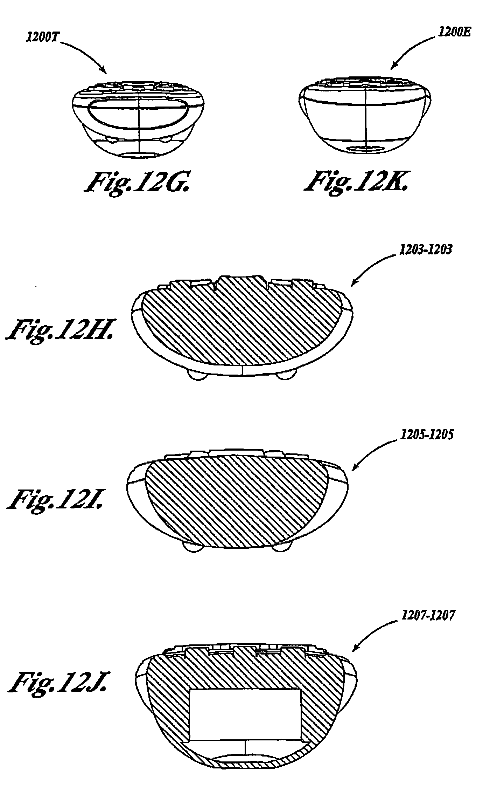

FIGURES 12A-12K illustrate different block views of a Media Computing Device Remote Control, according to an embodiment of the present invention. In particular, the views of a Media Computing Device Remote Control illustrated in FIGURES 12A-12K further illustrate the ergonomic design of Media Computing Device Remote Controls, according to an embodiment of the present invention. FIGURE 12A illustrates a front view 1200F of a Media Computing Device Remote Control. As can be seen from the front view 1200F, the Media Computing Device Remote Control is designed to ergonomically fit a user's hand by curving the center portions of the Media Computing Device Remote Control. FIGURE 12B illustrates a left view 1200L of a Media Computing Device Remote Control, according to an embodiment of the present invention. As can be seen from the left view 1200L of the Media Computing Device Remote Control, the device has a curved bottom to ergonomically fit in a user's hand.

Likewise, FIGURE 12C illustrates a sectional left view of a Media Computing Device Remote Control, according to an embodiment of the present invention. In particular, the sectional view of FIGURE 12C is a section 1201-1201 illustrated from FIGURE 12A. FIGURE 12D illustrates a back view 1200B of a Media Computing Device Remote Control, according to an embodiment of the present invention. FIGURE 12E illustrates an angled front view 1200A of a Media Computing Device Remote Control, according to an embodiment of the present invention. FIGURE 12F shows yet another angled back view 1200B of a Media Computing Device Remote Control, according to an embodiment of the present invention. FIGURE 12G illustrates a top view 1200T of a Media Computing Device Remote Control according to an embodiment of the present invention. As can be seen from the top view 1200T, the Media Computing Device Remote Control has a curved bottom and is ergonomically designed to fit comfortably within a user's hand.

FIGURE 12H illustrates a block diagram of a sectional view 1203-1203 of a Media Computing Device illustrated in FIGURE 12A. As can be seen from the sectional view 1203-1203 of FIGURE 12H, the Media Computing Device, according to an embodiment of the present invention, is ergonomically designed. Likewise, FIGURE 121 and FIGURE 12J illustrate sectional views 1205-1205, and sectional view 1207-1207, respectively, of the Media Computing Device Remote Control illustrated in FIGURE 12A. Finally, FIGURE 12K illustrates an end view 1200E of a Media Computing Device Remote Control, according to an embodiment of the present invention.

As is apparent from the above description, the four function groups of the Media Computing Device Remote Control may contain any combination of required and optional buttons and be arranged and presented in numerous ways on the Media Computing Device Remote Control. However, as discussed above, the START button of the Media Computing Device Remote Control provides a user with the ability to easily access and interface with any part of a Media Computing Device.

While embodiments of the invention have been illustrated and described, it will be appreciated that various changes can be made therein without departing from the spirit and scope of the invention.

The embodiments of the invention in which an exclusive property or privilege is claimed are defined as follows:

## Claims

1. A remote control device, comprising:
a plurality of audio/video buttons disposed on the remote control device;
a plurality of numeric keypad buttons disposed on the remote control device;
a plurality of transport buttons disposed on the remote control device; and
a plurality of navigation buttons disposed on the remote control device, wherein a START button is included in the plurality of navigation buttons.

2. The remote control device of Claim 1, further comprising a shortcut button disposed on the remote control device.

3. The remote control device of Claim 2, wherein the shortcut button is a My TV button.

4. The remote control device of Claim 2, wherein the shortcut button is a My Music button.

5. The remote control device of Claim 2, wherein the shortcut button is a My Videos button.

6. The remote control device of Claim 2, wherein the shortcut button is a My Pictures button.

7. The remote control device of Claim 2, wherein the shortcut button is a Recorded TV button.

8. The remote control device of Claim 2, wherein the shortcut button is a Radio button.

9. The remote control device of Claim 1, further having disposed on the remote control device a grouping of My TV, My Music, My Pictures, and My Videos buttons.

10. The remote control device of Claim 1, further comprising:
a standby button disposed on the remote control.

11. The remote control device of Claim 1, further comprising:
a print button disposed on the remote control device.

12. The remote control device of Claim 1, further comprising:
an aspect button disposed on the remote control device.

13. The remote control device of Claim I, further comprising:
an eject button disposed on the remote control device.

14. The remote control device of Claim 1, further comprising:
a teletext button disposed on the remote control device, wherein the teletext control enables the numeric keypad for teletext input.

15. The remote control device of Claim 1, wherein the START button has a width of approximately 12 millimeters and a height of approximately 9 millimeters.

16. The remote control device of Claim 1, wherein the START button is a shape of a rounded rectangle.

17. The remote control device of Claim 1, wherein the START button is green.

18. The remote control device of Claim 1, wherein the START button includes a Windows flag logo displayed on the START button.

19. The remote control device of Claim 1, wherein the remote control device is an ergonomically shaped remote control device.

20. The remote control device of Claim 1, wherein the plurality of navigation buttons provide a user with an ability to interact with a Media Computing Device.

21. The remote control device of Claim 1, wherein actuation of at least one of the navigation buttons generates a signal from the remote control device to instruct a Media Computing Device to alter a focal point displayed on an interface display.

22. The remote control device of Claim 21, wherein the interface display is a tab-based interface display.

23. The remote control device of Claim 21, wherein the interface display allows a user to interact with the Media Computing Device from a remote distance.

24. The remote control device of Claim 1, wherein actuation of the START button generates a signal from the remote control device to instruct a Media Computing Device to display a Media Computing Device home page.

25. The remote control device of Claim 24, wherein the Media Computing Device home page is presented on an interface display.

26. A remote control device for interacting and interfacing with a Media Computing Device, comprising:
a plurality of navigation buttons disposed on the remote control device, wherein the plurality of navigation buttons include a START button;
a plurality of transport buttons disposed on the remote control device;
a plurality of audio/video buttons disposed on the remote control device; and
a plurality of numeric keypad buttons disposed on the remote control device.

27. The remote control device of Claim 26, wherein the plurality of navigation buttons are configured to initiate a transmission of signals from the remote control device to control navigation within a Media Computing Device interface.

28. The remote control device of Claim 27, wherein the Media Computing Device interface is a tab interface.

29. The remote control device of Claim 26, wherein the plurality of transport buttons are configured to initiate a transmission of signals from the remote control device to manage playback of media stored on the Media Computing Device.

30. The remote control device of Claim 26, wherein the plurality audio/video buttons includes a standby button configured to initiate a transmission of a signal to place the Media Computing Device in a standby mode.

31. A remote control device, comprising:
a START button disposed on the remote control device; and
a plurality of shortcut buttons disposed on the remote control device.

32. The remote control device of Claim 31, wherein the START button is configured to initiate a transmission of a signal from the remote control device to activate a Media Computing Device.

33. The remote control device of Claim 31, wherein the START button is configured to initiate a transmission of a signal from the remote control device to generate a display of a Media Computing Device Home page.

34. The remote control device of Claim 31, wherein the shortcut button is a My TV button, and wherein the My TV button is configured to initiate a transmission of a signal from the remote control device to generate a display of a TV Home page.

35. The remote control device of Claim 31, wherein the shortcut button is a My Music button, and wherein the My Music button is configured to initiate a transmission of a signal from the remote control device to generate a display of a Music page.

36. The remote control device of Claim 31, wherein the shortcut button is a Recorded TV button, and wherein the Recorded TV button is configured to initiate a transmission of a signal from the remote control device to generate a display of a Recorded TV page.

37. The remote control device of Claim 31, wherein the shortcut button is a My Pictures button, and wherein the My Pictures button is configured to initiate a transmission of a signal from the remote control device to generate a display of a My Pictures page.

38. The remote control device of Claim 31, wherein the shortcut button is a My Videos button, and wherein the My Videos button is configured to initiate a transmission of a signal from the remote control device to generate a display of a My Videos page.

39. The remote control device of Claim 31, wherein the shortcut button is a Radio button, and wherein the radio button is configured to initiate a transmission of a signal from the remote control device to generate a display of a Radio page.

40. The remote control device of Claim 31, further comprising:
at least one programmable button.

41. The remote control device of Claim 31, further comprising:
a print button, wherein the print button is configured to initiate a transmission of a signal from the remote control device to print an item.

42. The remote control device of Claim 31, further comprising:
an aspect button, wherein the aspect button is configured to initiate a transmission of a signal from the remote control device to change an aspect of an image.

43. The remote control device of Claim 31, further comprising:
an eject button, wherein the eject button is configured to initiate a transmission of a signal from the remote control device to eject a media drive.

44. The remote control device of Claim 31, further comprising:
a teletext button, wherein the teletext button is configured to allow teletext input via a numeric keypad.

45. The remote control device of Claim 31, further comprising:
a display button, wherein the display button is configured to initiate a transmission of a signal from the remote control device to turn on or off a display.
